# EUROPÄISCHE PATENTSCHRIFT

(11) **EP 0 201 126 B1**
(45) Veröffentlichungstag und Bekanntmachung des Hinweises auf die Patenterteilung: **30.06.1993**
(21) Anmeldenummer: 86200724.2
(22) Anmeldetag: 29.04.1986
(51) Int. Cl.: H04Q 7/04, H04B 7/26

(54) **Dienstintegriertes Funkübertragungssystem**
Integrated services radio transmission system
Système de radio-transmission à intégration de services

(30) Priorität: 04.05.1985 DE 3516074
(43) Veröffentlichungstag der Anmeldung: 17.12.1986
(73) Patentinhaber: Philips Patentverwaltung GmbH, 22335 Hamburg (DE); Philips Electronics N.V., 5621 BA Eindhoven (NL)
(72) Erfinder: Schmidt, Werner, Dr.-Ing., Co. Roscommon (IE)
(74) Vertreter: Peuckert, Hermann, Dipl.-Ing.

(56) Entgegenhaltungen:
- EP-A- 0 121 188
- DE-A- 3 311 043
- FR-A- 2 376 570
- PROCEEDINGS OF THE INTERNATIONAL SWITCHING SYMPOSIUM, Florenz, 7.-11. Mai 1984, Teil 2, 'Session' 31 B, Paper 4, Seiten 1-7, North-Holland, Amsterdam, NL; A. STOLL et al.: "Realization of signaling system no. 7 in an ISDN"
- PROCEEDINGS OF THE INTERNATIONAL SWITCHING SYMPOSIUM, Florenz, 7.-11. Mai 1984, Teil 2, 'Session' 32 B, Paper 7, Seiten 1-6, North-Holland, Amsterdam, NL; A. COMO et al.: "Mobile service in the ISDN"

## Beschreibung

Die Erfindung betrifft ein Funkübertragungssystem gemäß dem Oberbegriff des Patentanspruchs 1.

Als dienstintegriertes Digitalnetz ISDN wird ein Netz bezeichnet, welches digitale Verbindungen für eine Vielzahl von Diensten zwischen einheitlichen, normierten Benützer-/Netzschnittstellen zur Verfügung stellt (Technische Mitteilungen PTT, 1/1985, "ISDN-Dienstintegrierte Digitalnetze" von H. K. Pfyffer, Seiten 2-8). Im vorgenannten Zeitschriftenaufsatz wird ein Überblick über die wesentlichen Charkteristiken von ISDN gegeben und auf künftige Entwicklungsmöglichkeiten hingewiesen.

ISDN ist demnach dadurch charakterisiert, daß im gleichen Netz die Übermittlung von Sprachsignalen und von Nichtsprachsignalen (z.B. Datensignalen) stattfindet und daß eine beschränkte Typenvielfalt von normierten Benützerinterfaces vorgegeben ist. Im dienstintegrierten Digitalnetz ISDN ist ein einheitlicher Zugang der Teilnehmer für eine Mehrzahl von Diensten zu schaffen, wobei eine netzeinheitliche Schnittstelle zur Teilnehmerseite hin vorgesehen ist.

Die netzeinheitliche Schnittstelle umfaßt sogenannte B-Kanäle und einen D-Kanal, welche im digitalen Multiplex übertragen werden, wobei ein B-Kanal eine Bitrate von 64 kbit/s und der D-Kanal eine Bitrate von 16 kbit/s aufweist. An der Schnittstelle sind die beiden B-Kanäle voneinander unabhängig, wodurch zwei separate Verbindungen gleichzeitig mit der Schnittstellenschaltung aufgebaut werden können. Der D-Kanal dient einerseits zur Signalisierung und andererseits auch für die Übertragung von Nachrichten mit kleinen Bitraten (Datenübertragung sowie Telemetrie). Im B-Kanal mit 64 kbit/s erfolgt die Nachrichtenübertragung der einzelnen Dienste z. B. Telefonie, Faksmile, schnelle Datenübertragung usw.

Auf Seite 5 des oben angegebenen Zeitschriftenaufsatz ist das OSI-Architekturmodell für die Protokolle näher beschrieben und erläutert. Das dienstintegrierte Digitalnetz ISDN umfaßt dabei die Schichten 1 bis 3, wobei, entsprechend der Vorgabe einer netzeinheitlichen Schnittstelle um verschiedene Dienste abwickeln zu können, auch die Schnittstellenschaltungen in der ersten Ebene einheitlich sein müssen. Dies führt dazu, daß die erste Ebene für den Dienst mit den höchsten Übertragungsanforderungen (z.B. Bitrate) ausgelegt werden muß und daher bei der Anwendung in einem Funkübertragungssystem nicht frequenzökonomisch ist.
Aus "Proceedings of the International Switching Symposium, Florenz, 7.-11. Mai 1984, Teil 2, 'Session' 32 B, Paper 7, Seiten 1-16, North Holland, Amsterdam, NL, A. Como et al.:'Mobile Service in the ISDN' ist ein Funkübertragungssystem für bewegliche Teilnehmerstationen bekannt, bei welchem ISDN-Dienste auch den Mobilteilnehmern zugänglich gemacht werden sollen.
Aus der DE-OS 33 11 043 ist ein Verfahren zur Herstellung von Verbindungen zwischen Teilnehmerstellen mit unterschiedlichen Endgeräten, d.h. mit unterschiedlichem Bedarf an Übertragungskanalkapazitäten, bekannt. Zur Herstellung der Verbindung gibt eine rufende Teilnehmerstelle zusammen mit einer Wählinformation ein Informationssignal ab, mit dem die geforderte Übertragungskanalkapazität und gegebenenfalls die in die Verbindung einzubeziehenden Endgeräte der anzurufenden Teilnehmer stelle bezeichnet werden. In der Vermittlungsanlage werden die für die Verbindungen jeweils erforderlichen Übertragungskanalkapazitäten bereitgestellt. Weiterhin wird in der Vermittlungsstelle unter Heranziehung des Informationssignals und dort abgespeicherter, auf die rufende Teilnehmerstelle sich beziehender Angaben geprüft, ob die gewünschte Verbindung herstellbar ist oder nicht. Ist die Verbindung herstellbar, so wird der gerufenen und rufenden Teilnehmerstelle die erforderliche Übertragungskanalkapazität zur Verfügung gestellt und gegebenfalls wird der gerufenen Teilnehmerstelle signalisiert, welche Endgeräte in die Verbindung einzubeziehen sind.

Ein solches Verfahren mit einheitlicher Erstsignalisierung weist bei der Anwendung in einem dienstintegrierten Funkübertragungssystem den Nachteil auf, daß es unterschiedliche Sende-/Empfangseinrichtungen für die Signalisierung und für den eigentlichen Dienst erfordert.

In bekannten analogen Funkübertragungssystemen (vgl. beispielsweise TE KA DE Technische Mitteilung 1980, Seiten 10-14) sind die Teilnehmergeräte (bewegliche Funkstationen) bezüglich ihrer Funktion einheitliche Produkte. Die Betreiber von Funkübertragungssystemen legen Systemkonstanten, wie z.B. Anzahl der zu sendenden Funkmeldungen, Hörtöne, Anzeigen, HF- und Jitterschwellen, Anzahl der Wiederholungen oder Zeiten für die Überwachung, in sogenannten Pflichtenheften fest. Die Hersteller der Teilnehmergeräte nehmen die vorgegebenen Systemkonstanten an irgendeiner Stelle im jeweils entwickelten Programm auf, so daß eine Änderung der Systemkonstanten gleichzusetzen ist mit einer Änderung der im Programmspeicher aufgenommenen Programme.

In P 34 31 302 ist aufgezeigt worden, wie der Betreiber des Funkübertragungssystems die Systemkonstanten während des Betriebs ändern kann, ohne daß der Hersteller des Teilnehmergeräts das im Programmspeicher aufgenommene Programm ändern muß. Hierbei werden Systemkonstanten und Leistungsmerkmale in einem in dem Teilnehmergerät angeordneten Speicher abgespeichert, wodurch die Möglichkeit geschaffen wurde, bestimmte Dienste auf bestimmte Gebiete des Funkübertragungssystems zu begrenzen.

Der Erfindung liegt die Aufgabe zugrunde, in einem Funkübertragungssystem verschiedene Dienste mit unterschiedlichen Übertragungsanforderungen mit geringem Aufwand zu installieren.

Diese Aufgabe wird durch ein Funkübertragungssystem gemäß dem Patentanspruch 1 gelöst.

Beim erfindungsgemäßen dienstintegrierten Funkübertragungssystem wird im Gegensatz zu den Teilnehmergeräten im ISDN nicht jedem möglichen Benutzer die maximale Übertragungsrate zu Verfügung gestellt. Gründe hierfür sind: die begrenzte zur Verfügung stehende Systembandbreite; die Tatsache, daß nicht alle Dienste von einem Teinehmer zur selben Zeit benutzt werden; die Tatsache, daß nicht alle möglichen Dienste in jedem Teilnehmergerät realisiert sein müssen; die Tatsache, daß nur wenige Dienste überall im dienstintegrierten Funkübertragungsstem verfügbar sein müssen. Hierbei wird zwischen den Teilnehmergeräten die zur Verfügung stehende Gesamtbandbreite bezüglich Zeit und Fläche (geographische Frequenzwiederholung) entsprechend dem jeweils aktuellen Bedarf aufgeteilt.
Im Funkübertragungssystem sind in jedem Teilnehmergerät nur diejenigen Funktionen realisiert, welche für den oder die Teilnehmergeräte zu erbringenden Dienste erforderlich sind. Dies hat zur Folge, daß nur eine Teilmenge von Funktionen allen Teilnehmergeräten gemeinsam ist. Hier durch kann in vorteilhafter Weise der Aufwand in den Teilnehmergeräten verringert werden.

Auch in der ortsfesten Funkstelle kann beim erfindungsgemäßen dienstintegrierten Funkübertragungssystem der Aufwand auf einfache Art und Weise verringert werden, indem nicht jede Kanaleinrichtung jeden der vielen Dienste bedient. Hierbei werden die ortsfesten Funkstellen nur mit solchen Einrichtungen für verschiedene Dienste versehen, für welche von den Teilnehmern ein Bedarf besteht.

Beim erfindungsgemäßen dienstintegrierten Funkübertragungssystem ist nicht jede mögliche Funktion in jedem Teilnehmergerät realisiert, da jeder Benutzer ohnedies nur von einigen wenigen Funktionen oder Diensten Gebrauch macht.

Die Kosten für das dienstintegrierte Funkübertragungssystem setzen sich im wesentlichen zusammen aus den Funktionen, die mindestens für den Zugang zum dienstintegrierten Funkübertragungssystem erforderlich sind und den Funktionen, für die ein Bedarf auf der Seite der Teilnehmer vorhanden ist. Das erfindungsgemäße dienstintegrierte Funkübertragungssystem weist für die Hersteller der Teilnehmergeräte den Vorteil auf, daß sich erstmalig die Möglichkeit ergibt, für die verschiedenen Marktsegmente auch verschiedene Produktlinien zu schaffen und jedem Teilnehmer ein auf dessen Bedürfnisse zugeschnittenes kostengünstiges Gerät anzubieten. Solche verschiedene Teilnehmergeräte können beispielsweise sein: ein einfacher Funkruf-Empfänger mit alphanummerischer Anzeige; ein "Westentaschen-Telefon" mit einer Empfangs- und einer Sendefrequenz zur Benutzung in einem eingeschränkten geographischen Bereich und mit verminderter Dienstgüte; ein "Dispatch-Gerät" (beim "Dispatch-Dienst" wird in der Richtung von der ortsfesten Funkstelle zu den Fahrzeugen einer Flotte ein gemeinsamer Kanal benutzt, während in der Rückrichtung jedes Fahrzeug einen eigenen Funkübertragungskanal belegen kann) mit einer Empfangs- und wenigen Sendefrequenzen für Halbduplex-Betrieb; ein handportables Telefon mit mehreren Empfangs- und Sendefrequenzen für Duplexbetrieb und landesweiter Versorgung, das auch im Fahrzeug benutzt werden kann; ein mobiles Datenterminal mit einer Halbduplex-Übertragung im Paketverfahren mit niedriger Datenrate; ein "Mobiles Büro" (z.B. für Baustellen, Banken usw.) mit transparenter Duplex-Übertragung von 64 kbit/s, welches nur stationär betrieben wird.

Das erfindungsgemäße dienstintegrierte Funkübertragungssystem gibt also eine frequenzökonomische Lösung zur Diensteintegration mit geringem Aufwand im jeweiligen Teilnehmergerät, mit flexibler und frequenzkompatibler Einführung zukünftiger Dienste und mit der Möglichkeit der Einführung niederratiger Sprachdigitalisierungsverfahren an. In vorteilhafter Weise kann die für die Nachrichtenübertragung vorgesehene Gesamtbreite der einzelnen Funkübertragungskanäle möglichst klein gewählt werden. Auch wenn die Dienste und das Dienstespektrum noch auf einige Zeit nicht, oder nicht in allen Ländern, vom drahtgebundenen öffentlichen Fernmeldenetz bereitgestellt werden können, so ist beim erfindungsgemäßen dienstintegrierten Funkübertragungssystem bereits die Basis dafür geschaffen worden, diese Dienste zukünftig zu integrieren können, wenn diese vom leitungsgebundenen Übertragungs- und Vermittlungsnetz angeboten bzw. durch Technologiefortschritt (Höchstintegration) ermöglicht werden.

Weiterhin erlaubt das erfindungsgemäße dienstintegrierte Funkübertragungssystem auch die schrittweise Einführung neuer Dienste mit unterschiedlichen Bitraten und Anforderungen, z.B. an den Fehlerschutz, ohne Rückwirkung auf bereits existierende Dienste oder in Betrieb befindliche Teilnehmergeräte. In der Richtung vom Teilnehmergerät zur ortsfesten Funkstation kann für jeden Nachrichtenübertragungskanal ein Empfänger vorgesehen sein, dessen Frequenz über das gesamte verfügbare Frequenzband schaltbar ist. Damit ist es möglich, mit einer einzigen für einen neuen Dienst und dessen Umsetzung in das leitungsgebundene offentliche Drahtnetz spezifierten Empfängerund Kanaleinheit in der ortsfesten Funkstelle diesen neuen Dienst anzubieten. Die bereits vorhandenen Empfänger der ortsfesten Funkstelle müssen weder ersetzt noch modifiziert werden. Der zusätzliche Empfänger kann für ein anderes Modulations-/Demodulationsverfahren, eine dem Dienst angepaßte Kanalcodierung und auch für eine andere Bandbreite ausgelegt sein. Damit ist jede Kombination von verschiedenen Diensten kostengünstig zu realisieren. Die geschilderten Empfänger- und Kanaleinheiten müssen in der ortsfesten Funkstelle nur dort installiert werden, wo diese auch benutzt werden. Dadurch können lokal, regional oder national unterschiedliche Dienste angeboten werden.

Das Funkübertragungssystem gemäß Patentanspruch 5 weist den Vorteil auf, daß als einziger allen Teilnehmergeräten gemeinsamer Schaltungsteil lediglich ein für das Übertragungsverfahren von der ortsfesten Funkstelle zu den Teilnehmergeräten gleicher Empfänger vorhanden sein muß. Dieser Schaltungsteil läßt sich kostengünstig mittels einer hochintegrierten Schaltung herstellen. Für einfache, nur lokal benutzte Teilnehmergeräte (z.B. sogenannte "Messagepager") muß nicht einmal ein Synthesizer vorhanden sein. Falls im Teilnehmergerät ein Synthesizer eingebaut ist kann dieses auch netzweit betrieben werden. Auch "Taschen-Telefone" (mit einem Festfrequenzempfänger und einem Festfrequenzsender) können verwendet werden, wenn jeder Empfänger der ortsfesten Funkstelle auf alle Frequenzen schaltbar ist. Die damit verbundene erhöhte Blockierungswahrscheinlichkeit, wenn diese Frequenz belegt ist, wird dadurch vermindert, wenn im Teilnehmergerät eine begrenzte Anzahl von beispielsweise 40 Sendefrequenzen schaltbar ist.

Das Funkübertragungssystem gemäß Patentanspruch 6 weist den Vorteil auf, daß durch die Verwendung eines Vielfachzugriffsverfahrens der Teilnehmergeräte auf die im Gesamtfrequenzband liegenden Funkübertragungskanäle verhindert werden kann, daß ein defektes Teilnehmergerät durch kontinuierliches oder unkoordiniertes Senden Teile des funkübertragsungssystems außer Betrieb setzen kann.

Die Erfindung wird im folgenden anhand in der Zeichnung dargestellter Ausführungsformen näher beschrieben und erläutert. Es zeigt:
- Fig. 1: die Struktur des erfindungsgemäßen dienstintegrierten Funkübertragungssystems,
- Fig. 2: in Tabellenform die Zuordnung verschiedener Dienste zu verschiedenen Teilnehmergeräten,
- Fig. 3: verschiedene auf einem Funkübertragunskanal übertragene Meldungen,
- Fig. 4: das Blockschaltbild des Sendeteils in der ortsfesten Funkstelle und
- Fig. 5: das Blockschaltbild des Empfangsteils im Teilnehmergerät.

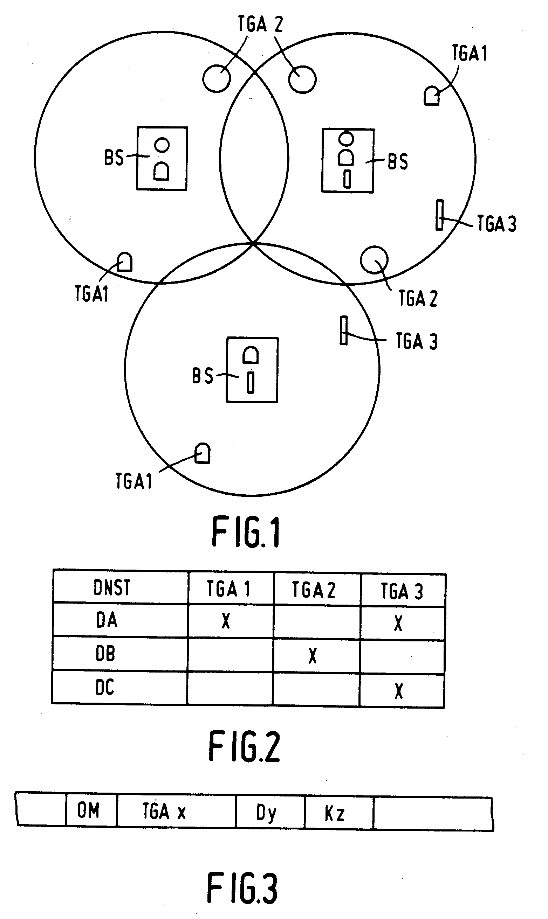

Fig. 1 zeigt die Struktur des erfindungsgemäßen dienstintegrierten Funkübertragungssystem. Im Funkübertragungssystem sind ortsfeste Funkstellen BS räumlich nach einem Zellensystem angeordnet. Jeder ortsfesten Funkstelle BS sind eine Anzahl von Funkübertragungskanälen zugeordnet, über welche Nachrichten zu beweglichen Teilnehmergeräten TG übertragen werden. Einer dieser Funkübertragungskanäle wird für die Signalisierung zur Steuerung der Systemfunktionen verwendet. Dazu gehört z.B. die Übertragung von Wahlinformationen beim Aufbau von Gesprächen zu den Teilnehmergeräten TG. Im Funkübertragungssystem können unterschiedliche Arten von Teilnehmergeräten und verschiedene Dienste betrieben werden.

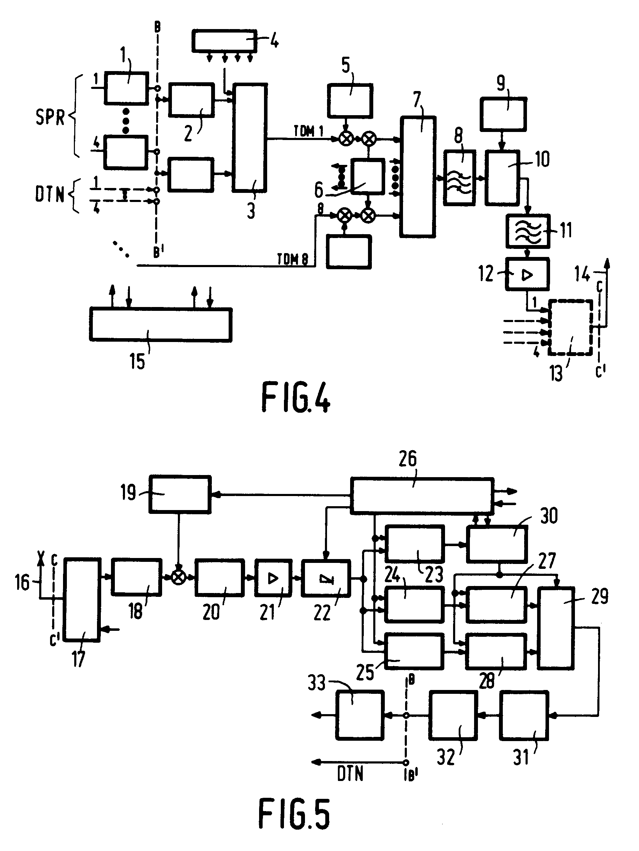

In Fig.1 sind die Teilnehmergerätearten durch die Bezugszeichen TGA 1, TGA 2... gekennzeichnet. Jedes Teilnehmergerät TG weist zum Empfang und zur Auswertung einer über den Funkübertragungskanal übertragenen Dienstemeldung, in welchem Meldungen von der ortsfesten Funkstelle BS ausgesendet werden, Einrichtungen (siehe Fig. 5) auf. Die verschiedenen Symbole deuten den von der jeweiligen Kanaleinrichtung bedienbaren Dienst an. In den Dienstemeldungen wird den Teilnehmergeräten TG von der ortsfesten Funkstelle BS die bedienbaren Teilnehmergerätearten TGA x und/oder die von dieser angebotenen Dienste Dy mitgeteilt.

Die Tabelle gemäß Fig. 2 zeigt die Zuordnung der verschiedenen Dienste zu den verschiedenen Teilnehmergeräten TG. Wie aus der Tabelle hervorgeht, sind nicht alle möglichen Dienste Dy in jedem Teilnehmergerät TG realisiert. Der Dienst DA kann beispielsweise ein Sprachdienst, der Dienst DB ein Datendienst mit niedriger Bitrate und der Dienst DC ein Datendienst mit hoher Bitrate sein.

In Fig. 3 sind verschiedene auf dem Funkübertragungskanal übertragene Meldungen dargestellt. In den Dienstemeldungen werden von der ortsfesten Funkstelle BS den Teilnehmergeräten TG mittels der Meldung Kz diejenigen Funkübertragungskanäle, z.B. K₅, K₁₇ und K₃₁, mitgeteilt, auf welchen die ortsfeste Funkstelle BS zur Zeit empfangsbereit ist. Weiterhin wird den Teilnehmergeräten TG neben den von der ortsfesten Funkstelle BS empfangbaren Übertragungskanälen Kz ein Dienst Dy und/oder eine Teilnehmergeräteart TGAx mitgeteilt. Um die vorgenannten Meldungen als Organisationsmeldung zu kennzeichnen, wird am Anfang des Datenblocks ein mit OM bezeichnetes Wort gestellt. Anhand Fig. 4 und Fig. 5 wird im folgenden die Erzeugung der Dienstemeldung in der ortsfesten Funkstelle BS und die Auswertung der im Teilnehmergerät TG empfangenen Dienstemeldungen näher beschrieben und erläutert.

Fig. 4 zeigt das Blockschaltbild des Sendeteils der ortsfesten Funkstelle BS bei Vollausbau des Netzes. Der im Basisband übertragene Daten-/Sprachstrom setzt sich folgendermaßen zusammen. Die digitalisierte Sprache jedes einzelnen Kanals wird zunächst in einem Transcoder 1 von PCM auf das für die Funkübertragung erforderliche Übertragungsverfahren mit entsprechend geringerer Bitrate umcodiert. An der Schnittstelle B-B kann eine Datenquelle angeschlossen werden. In einem mit der Datenquelle bzw. den Transcoder 1 verbundenen Kanalcodierer 2 wird eine spezielle Kanalcodierung zum Schutz signifikanter Bits gegen Übertragungsfehler auf dem Übertragungskanal hinzugefügt. Diese Kanalcodierung ist je nach zu übertragendem Dienst unterschiedlich. In einem mit dem Kanalcodierer 2 verbundenen Multiplexer 3 wird in den Datenstrom die verbindungsbegleitende Signalisierung und die von einer Synchronisierschaltung 4 herrührende Synchronsisationsinformation hinzugefügt. Das TDM-Signal (Time Division Multiplex-Signal) am Ausgang des Multiplexers 3 enthält also bei der in Fig. 4 dargestellten Ausführungsform vier Sprach-/Datenkanäle, einen verbindungsbegleitenden Signalisierungskanal (für ein TDM--Kanalbündel) sowie die für die Synchronisation in den Teilnehmergeräten TG erforderlichen Synchronisationsbits. Die Synchronisierbits werden in Codeebenen oder Frequenzebenen eingeblendet, wie dies in der P 35 11 430.4 vorgeschlagen ist.

Das TDM-Signal am Ausgang des Mutiplexers 3 wird mit den jeweiligen von Codegeneratoren 5 erzeugten Codeworten multipliziert, wobei jeweils zwei Bit zu einem Symbol zusammengefaßt und mit dem gewünschten Code gespreizt werden. Mit dem gespreizten Signal wird dann die Phase eines aus einem Oszillator 6 stammenden Trägersignals umgetastet, wodurch ein mit der Information und dem Codewort verknüpftes, bei einer niedrigen Sendefrequenz moduliertes BPSK (Binary Phase Shift Keying) Signal steht. Das modulierte CDM-Signal wird einem Summierer 7 zugeführt, dessen Ausgang mit einem Bandpaßfilter 8 verbunden ist. Acht dieser modulierten CDM-Signale bilden nach Addition und Bandpaßfilterung ein in der Amplitude mehrstufiges Gesamtsignal, das schließlich auf die Endfrequenz umgesetzt wird.

Hierzu ist als Mischoszillator ein Synthesizer 9 vorgesehen, welcher innerhalb des Frequenzbereichs des dienstintegrierten Funkübertragungssystems mit entsprechenden Stufen geschaltet werden kann. Der Synthesizer 9 ist nur für die wenigen möglichen Frequenzen der FDMA-Stufe (Frequenzy Division Multiplex Access-Stufe) ausgelegt. Die Mischung des CDM-Signals mit der entsprechenden vom Synthesizer 9 gelieferten Frequenz erfolgt in einer Einrichtung 10, welche mit einem Bandpaßfilter 11 verbunden ist. Der Ausgang des Bandpaßfilters 11 ist mit einem Leistungsverstärker 12 verbunden und das herausgefilterte und verstärkte Sendesignal gelangt über einen Senderkoppler 13 zur Antenne 14. Bei kleineren ortsfesten Funkstellen BS mit bis zu 32 Nachrichtenübertragungskanälen entfällt der Senderkoppler 13 völlig.

Die Kanal- und Codegeneratoreinstellung, die richtige Auswahl der Kanalcodierung und die Einfügungen von Meldungen Kz, TGA und Dy in die Dienstemeldung erfolgt mittels einer in der ortsfesten Funkstelle BS angeordneten Steuereinrichtung 15. Der ausgewählte Funkübertragungskanal kann dabei ein TDM-Kanal in einer CDM-Ebene sein (vgl. P 35 11 430.4).

Fig. 5 zeigt das Blockschaltbild des Empfangsteils der Teilnehmergeräte TG. Das von einer gemeinsamen Sende-/Empfangstenne 16 empfangene Signal gelangt über ein Empfangsfilter eines Duplexers 17 zur Eingangsstufe 18 des Empfängers. Die Anforderungen an das Empfangsfilter des Duplexers 17 sind relativ gering, so daß sich auch für Teilnehmergeräte TG mit geringer Diensteanforderung, z.B. einfaches Datenfunkgerät, eine kostengünstige Lösung ergibt. In der Eingangsstufe 18 wird das Signal verstärkt und dann mit einer aus einem Synthesizer 19 stammenden Synthesizerfrequenz auf eine Zwischenfrequenz gemischt.

Das Zwischenfrequenzsignal wird einem ZF-Teil 20 zugeführt, in dem eine weitere Verstärkung und Filterung des Signals vorgenommen wird. Auch für den Synthesizer 19 kann wie für den Synthesizer 9 der ortsfesten Funkstelle BS ein einfacher Synthesizer verwendet werden, welcher sich kostengünstig realisieren läßt. Im ZF-Teil 20 sind Filter angeordnet, welche die Nachbarkanalselektion zur Abgrenzung gegen benachbarte Breitbandkanäle bzw. zur Unterdrückung von Mischprodukten dienen. Die eigentliche Rauschfilterung erfolgt in Korrelatoren 23 bis 25. Mit dem ZF-Teil 20 ist eine Amplituden-Regelschaltung 21 verbunden, welche das Ausgangssignal des ZF-Teils 20 auf einen ausreichenden Pegel zur Ansteuerung der nachfolgenden Schaltungen anhebt und eine mögliche Übersteuerung dieser Schaltungen verhindert. Die Amplituden-Regelschaltung 21 gleicht unterschiedliche Funkfelddämpfungen und Pegelschwankungen aufgrund von Abschattungen aus. Die Regelzeitkonstante der Amplituden-Regelschaltung 21 wird im wesentlichen von diesen Abschattungen bestimmt.

Das in der Leistung geregelte ZF-Signal am Ausgang der Amplituden-Regelschaltung 21 wird in einem mit dieser verbundenen Demodulator 22 ins Basisband umgesetzt. Dies kann beispielsweise nach dem Prinzip einer Costasschleife durchgeführt, so daß Frequenz und Phase mit berücksichtigt werden. Mehrdeutigkeiten um ganzzahlige Vielfache von 180° können anhand der Polarität der empfangenen Synchronworte (vgl. P 35 11 430.4) erkannt und entsprechend ausgeglichen werden.

Mit dem Demodulator 22 sind drei Korrelatoren 23, 24 und 25 verbunden, welche von einer Steuereinrichtung 26 auf die gerade gültigen Codes 1 und 2 und auf einen in der Funkzone für das gesamte Kanalbündel gültigen Synchroncode eingestellt werden. Mittels der Steuereinrichtung 26 wird die empfangene Dienstemeldung ausgewertet, indem die Daten der oder die von dem Teilnehmer gewünschte Dienste und die für die Teilnehmergeräteart TGAx vorgesehene Funkübertragungskanäle ausgelesen werden, ein in der Dienstemeldung als frei ausgewiesener und auch im Teilnehmergerät TG schaltbarer Funkübertragungskanal auswählt wird und anschließend ein Zugriffssignal auf diesem ausgewählten Funkübertragungskanal zur ortsfesten Funkstelle BS gesendet wird.

Das Ausgangssignal der Korrelatoren 23 bis 25 wird einerseits zur Ableitung von Symboltakt, Rahmentakt sowie Bittakt verwendet anderseits wird dieses zur Vermessung des augenblicklich gültigen Mehrwegeprofils herangezogen. Da ein einheitlicher Synchroncode mit entsprechend größerem Pegel in dem gesamten Kanalbündel zum gleichen Zeitpunkt abgestrahlt wird (vg. P35 11 430.4) ergibt sich eine sichere Synchronisationserkennung und Vermessung des Mehrwegeprofils.

Die Ausgänge der Korrelatoren 23 bis 25 sind mit Abtastschaltungen 27, 28 verbunden, welche die Ausgangssignale der Korrelatoren 23 bis 25 abtasten und das jeweilig Ergebnis einer Entscheidungsstufe 29 zuführen. Dabei werden die Ergebnisse der synchron zu den Echos der Mehrwegeausbreitung ablaufenden Abtastungen in der Entscheidungsstufe 29 proportional zur Amplitude der Echos (mittels einer Einrichtung 30) gewichtet. Die Entscheidungsstufe 29 hat die Aufgabe, den gesendeten Code und die Polarität des Codes zu schätzen. Der Schätzwert gestattet somit die Auswahl des mit der größten Wahrscheinlichkeit gesendeten Symbols. Nach der Symbol-Bit-Umwandlung in der Entscheidungsstufe 29 wird das Ausgangssignal einem mit der Entscheidungsstufe 29 verbundenen TDM-Demultiplexer 31 zugeführt. Der Demultiplexer 31 ist mit einem Kanal-Decodierer 32 verbunden an dessen Ausgang der gesendete Datenstrom wieder zur Verfügung steht. Bei digitaler Sprachübertragung wird in einem Sprachdecoder 33 das digitale Sprachsignal decodiert, einem D/A-Wandler und einem mit diesem verbundenen Lautsprecher zugeführt.

Ist im Teilnehmergerät TG beispielsweise die Dienstart Datendienst realisiert, so können die am Ausgang des Kanaldecodieres 32 auftretenden Daten sofort z.B. angezeigt oder ausgedruckt werden.

## Patentansprüche

1. Funkübertragungssystem für das Betreiben von unterschiedlichen Arten von Teilnehmergeräten (TGAx) und verschiedenen Diensten (Dy) mit mindestens einer ortsfesten Funkstelle (BS), mehreren beweglichen Teilnehmergeräten (TG) und mindestens einem Funkübertragungskanal, auf welchem die ortsfeste Funkstelle (BS) Meldungen (TGAx, Dy, Kz) aussendet, wobei jedes Teilnehmergerät (TG) Einrichtungen zum Empfang und zur Auswertung von über den Funkübertragungskanal übertragenen Meldungen aufweist,
dadurch gekennzeichnet,
daß in einer speziellen Meldung (Dienstemeldung), die von der ortsfesten Funkstelle (BS) bedienbaren Teilnehmergerätearten (TGAx) und/oder die von dieser angebotenen Dienste (Dy) mitgeteilt werden.

2. Funkübertragungssystem nach Anspruch 1
dadurch gekennzeichnet,
daß in der Dienstemeldung diejenigen Funkübertragungskanäle (Kz) an die Teilnehmergeräte (TG) mitgeteilt werden, auf welchen die ortsfeste Funkstelle (BS) zur Zeit empfangsbereit ist.

3. Funkübertragungssystem nach Anspruch 1
dadurch gekennzeichnet,
daß mehrere Dienstemeldungen zu einer Organisationsmeldung (OM) zusammengefaßt werden.

4. Funkübertragungssystem nach Anspruch 1 und 3, dadurch gekennzeichnet, daß in jeder Organisationsmeldung (OM) nur solche Funkübertragungskanäle (Kx) enthalten sind, welche momentan nicht durch andere Teilnehmergeräte (TG) belegt sind.

5. Funkübertragungssystem nach einem der Ansprüche 1 bis 4, dadurch gekennzeichnet, daß der vom Teilnehmergerät (TG) empfangene Organisationsdatenstrom mittels einer Steuereinrichtung (26) ausgewertet wird, indem der oder die von dem Teilnehmer gewünschte Dienste und die für die Teilnehmergeräteart (DGAx) vorgesehene Funkübertragungskanäle (Kz) ausgelesen werden, ein im Organisationsdatenstrom als frei ausgewiesener und auch im Teilnehmergerät (TG) schaltbarer Kanal ausgewählt wird und anschließend ein Zugriffssignal auf diesem ausgewählten Funkübertragungskanal zur ortfesten Funkstelle (BS) gesendet wird.

6. Funkübertragungssystem nach einem der Ansprüche 1 bis 5, dadurch gekennzeichnet, daß für einen oder mehrere Dienste (Dy) ein weiterer Nachrichtenübertragungskanal vorhanden ist, auf dem die Teilnehmergeräte (TG) unabhängig voneinander zugreifen können, welcher als einziger mittels einer Markierung gekennzeichnet ist und welcher in der zugehörigen Organisationsmeldung (OM) mitgeteilt wird und daß die Zugriffe der Teilnehmergeräte (TG) zeitlich verschachtelt nach einem Vielfachzugriff-Protokoll erfolgen.

7. Funkübertragungssystem nach einem der Ansprüche 1 bis 6, dadurch gekennzeichnet, daß nach einem erfolgreichen Zugriff eines Teilnehmergerätes (TG) die weitere Nachrichtenübertragung auf einen anderen, von der ortsfesten Funkstelle (BS) dem Teilnehmergerät (TG) zugewiesenen Funkübertragungskanal fortgeführt wird.

8. Teilnehmergerät für ein Funkübertragungssystem mit unterschiedlichen Arten von Teilnehmergeräten und verschiedenen Diensten, wobei jedes Teilnehmergerät Einrichtungen zum Empfang und zur Auswertung von über einen Funkübertragungskanal übertragene Meldungen aufweist,
dadurch gekennzeichnet,
daß aus einer speziell übertragenen Meldung (Dienstemeldung), die von einer ortsfesten Funkstelle bedienbaren Teilnehmergerätearten und/oder die von dieser ortsfesten Funkstation angebotenen Dienste ermittelt werden.

9. Teilnehmergerät nach Anspruch 8,
dadurch gekennzeichnet,
daß mit der Ermittlung eines vom Teilnehmergerät (TG) gewünschten Dienstes ein diesem Dienst zugeordneten freien Funkübertragungskanal aus der Dienstemeldung entnommen wird und auf diesem Funkübertragungskanal ein Zugriffssignal zur ortsfesten Funkstation (BS) gesendet wird.

10. Teilnehmergerät nach Anspruch 8 oder 9,
dadurch gekennzeichnet,
daß das Teilnehmergerät (TG) für unterschiedliche Bandbreiten ausgelegt ist.

## Claims

1. A radio transmission system for operating different types of subscriber set (TGAx) and various services (Dy), comprising at least one fixed radio station (BS), several mobile subscriber sets (TG), and at least one radio transmission channel via which the fixed radio station (BS) transmits messages (TGAx,Dy, Ks), each subscriber set (TG) comprising devices for receiving and evaluating messages transmitted via the radio transmission channel, characterized in that the types of subscriber set (TGAx) operable by the fixed radio station (BS) and/or the services (Dy) offered thereby are communicated by way of a special message (service message).

2. A radio transmission system as claimed in Claim 1, characterized in that the service message informs the subscriber sets (TG) of the radio transmission channel (Ks) via which the fixed radio station (BS) is ready to receive at that instant.

3. A radio transmission system as claimed in Claim 1, characterized in that several service messages are combined so as to form an organisation message (OM).

4. A radio transmission system as claimed in the Claims 1 and 3, characterized in that each organisation message (OM) contains only radio transmission channels (Ks) which are not occupied by other subscriber sets (TG) at that instant.

5. A radio transmission system as claimed in any one of the Claims 1 to 4, characterized in that the organisation data stream received by the subscriber set (TG) is evaluated by means of a control device (26) in that the service(s) desired by the subscriber and the radio transmission channels (Ks) provided for the type of subscriber Set (DGAx) are read, in that a channel is selected which is designated to be free in the organisation data stream and which is also switchable in the subscriber set (TG), and in that subsequently an access signal is transmitted to the fixed radio station (BS) via the selected radio transmission channel.

6. A radio transmission system as claimed in any one of the Claims 1 to 5, characterized in that for one or more services (Dy) there is provided a further message transmission channel which can be independently accessed by the subscriber sets (TG), which channel is characterized as the only one by a marker and is communicated in an associated organisation message (OM), the subscriber set (TG) accesses taking place in time-interleaved form in conformity with a multiple-access protocol.

7. A radio transmission system as claimed in any one of the Claims 1 to 6, characterized in that after a successful access by a subscriber set (TG), the further message transmission takes place via a radio transmission channel assigned to the subscriber set (TG) by the fixed radio station (BS).

8. A subscriber set for a radio transmission system with different types of subscriber sets and various services, each subscriber set comprising devices for receiving and evaluating messages transmitted via a radio transmission channel, characterized in that the types of subscriber sets operable by a fixed radio station and/or the services offered by this fixed radio station are determined from a special message transmitted (service message).

9. A subscriber set as claimed in Claim 8, characterized in that as a service desired by the subscriber set (TG) is determined, a free radio transmission channel associated with this service is derived from the service message and an access signal to the fixed radio station (BS) is transmitted via this radio transmission channel.

10. A subscriber set as claimed in Claim 8 or 9, characterized in that the subscriber set (TG) is designed for different bandwidths.

## Revendications

1. Système de radio-transmission pour l'exploitation de différents types d'appareils d'abonnés (TGAx) et divers services (Dy) avec au moins une station de radio fixe (BS), plusieurs appareils d'abonnés mobiles (TG) et au moins un canal de radio-transmission sur lequel la station de radio fixe (BS) envoie des communications (TGAx, Dy, Kz) chaque appareil d'abonné (TG) comportent des dispositifs pour la réception et l'évaluation de communications transmises via le canal de radio-transmission, caractérisé en ce que les types d'appareils d'abonnés (TGAx) qui peuvent être desservis par la station de radio fixe (BS) et/ou les services (Dy) offerts par cette station sont communiqués dans un message spécial (communication de services).

2. Système de radio-transmission selon la revendication 1, caractérisé en ce que la communication de services communique les canaux de radio-transmission (Kz) des appareils d'abonnés (TG), sur lesquels la station de radio fixe (BS) est prête à recevoir à ce moment-là.

3. Système de radio-transmission selon la revendication 1, caractérisé en ce que plusieurs communications de services sont regroupées en un message organisationnel (OM).

4. Système de radio-transmission selon les revendications 1 et 3, caractérisé en ce que chaque message organisationnel (OM) ne contient que les canaux de radio-transmission (Kx) qui ne sont momentanément pas occupés par d'autres appareils d'abonnés (TG).

5. Système de radio-transmission selon les revendications 1 à 4, caractérisé en ce que le flux de données organisationnelles reçues par l'appareil d'abonné (TG) est évalué via un dispositif de commande (26) par lecture du ou des services souhaités par l'abonné et des canaux de radio-transmission (Kz) prévus pour le type d'appareil d'abonné (DGAx), par sélection d'un canal identifié comme libre dans le flux de données organisationnelles et commutable dans l'appareil d'abonné (TG) et ensuite par l'envoi d'un signal d'accès sur ce canal de radio-transmission sélectionné à la station de radio fixe (BS).

6. Système de radio-transmission selon l'une quelconque des revendications 1 à 5, caractérisé en ce que pour un ou plusieurs services (Dy) est prévu un autre canal de télétransmission auquel les appareils d'abonnés (TG) peuvent accéder indépendamment l'un de l'autre, ce canal étant indiqué comme unique via une marque et étant notifié dans le message organisationnel connexe (OM), et que les accès des appareils d'abonnés (TG) s'imbriquent dans le temps selon un protocole d'accès multiple.

7. Système de radio-transmission selon l'une quelconque des revendications 1 à 6, caractérisé en ce que, après un accès satisfaisant d'un appareil d'abonné (TG), le reste de la télétransmission se poursuit sur un autre canal de radio-transmission affecté par la station de radio fixe (BS) à l'appareil d'abonné (TG).

8. Appareil d'abonné pour un système de radio-transmission avec différents types d'appareils d'abonnés et différents services, chaque appareil d'abonné comportant des dispositifs pour recevoir et évaluer des messages transmis via un canal de radio-transmission, caractérisé en ce qu'une communication (communication de services) spécialement transmise fournit les types d'appareils d'abonnés qui peuvent être desservis par une station de radio fixe et/ou les services offerts par cette station de radio fixe.

9. Appareil d'abonné selon la revendication 8, caractérisé en ce que, lors de la détermination d'un service souhaité par l'appareil d'abonné (TG), on retire un canal de radio-transmission libre affecté à ce service de la communication de service et on envoie à ce canal de radio-transmission un signal d'accès à la station de radio fixe (BS).

10. Appareil d'abonné selon la revendication 8 ou 9, caractérisé en ce que l'appareil d'abonné (TG) est conçu pour différentes largeurs de bande.
